(19) **Europäisches Patentamt / European Patent Office / Office européen des brevets**

(11) **EP 1 499 071 B1**

(12) **EUROPEAN PATENT SPECIFICATION**

(45) Date of publication and mention
of the grant of the patent:
**09.01.2008 Bulletin 2008/02**

(51) Int Cl.:
*H04L 12/403* (2006.01)    *H04L 12/64* (2006.01)
*H04L 12/56* (2006.01)

(21) Application number: **04016469.1**

(22) Date of filing: **13.07.2004**

(54) **Apparatus, method, program and information recording medium for data rate setting**

Vorrichtung, Verfahren, Program and Informationsaufzeichnungsmedium zur DatenratenRegelung

Dispositif, Procedé, Programme et Support d'enregistrement d'informations pour le réglage du débit

(84) Designated Contracting States:
**DE FR GB**

(30) Priority: **18.07.2003 JP 2003199404**

(43) Date of publication of application:
**19.01.2005 Bulletin 2005/03**

(73) Proprietor: **Pioneer Corporation
Meguro-ku,
Tokyo (JP)**

(72) Inventors:
• **Ono, Kinya
chome
Tokorozawa-shi
Saitama-ken (JP)**

• **Usuba, Hidemi
chome
Tokorozawa-shi
Saitama-ken (JP)**

(74) Representative: **Reinhard - Skuhra - Weise &
Partner
Postfach 44 01 51
80750 München (DE)**

(56) References cited:
**EP-A- 0 959 590**     **EP-A- 0 971 508**
**US-A- 5 504 757**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a technical field associated with a data rate setting apparatus, a data rate setting method, and an information recording medium in which a program to execute the data rate setting method is recorded, and more particularly to a technical field associated with a data rate setting apparatus, a data rate setting method, and an information recording medium in which a program to execute the data rate setting method is recorded to set the data rate between a plurality of devices in such a manner that information can be transmitted and received in a network in which information is transferred by establishing connections between the devices.

A method and apparatus for transmitting data among devices connecting to a serial data bus at maximum speed are disclosed in EP 0 971 508 A2.

Furthermore, EP 0 959 590 A2 discloses a data communication system, in which a source transmits a packet with a predetermined transfer rate to each destination and recognizes the maximum transfer rate to each destination according to the presence or absence of response to the packet.

2. Description of the Related Art

In recent years, what is called the IEEE 1394 standard (formally named as "IEEE Std. 1394-1995 IEEE Standard for a High Performance Serial Bus") has been widely used as a standard to transmit information in real time through a network such as a serial bus between a plurality of information processing devices (for example, a personal computer, a digital video camera, etc.), and personal computers, digital video cameras and so on having a serial port based on this standard are manufactured.

The IEEE 1394 standard stipulates that a plurality of information processing devices (hereinafter, referred to simply as the devices) are connected to each other by a serial bus to transmit information corresponding to a plurality of channels by time division between the devices. According to this standard, the information can be transmitted using a maximum of 63 different channels within a system connected by a single serial bus.

The IEEE 1394 standard has various advantages. For example, the information can be transmitted at a high rate, the freedom of so-called forming a topology is high, and the data can be suitably transmitted in real time by isochronous data transmission. This standard, therefore, has a higher utility than the conventional interface standards.

For some of the devices interconnected through the serial interface based on the IEEE 1394 standard, the condition of interconnections between the devices are managed according to what is called "the IEC-61883 Part 1 Standard" in addition to the IEEE 1394 standard described above.

According to the IEC-61883 Part 1 standard, when the connection is established for data transmission between the devices, each connection is managed by defining a logical plug (terminal) for the data transmission on each device, and further defining a register memory (hereinafter, referred to simply as the plug register) for storing in real time the information indicating the plug connection with respect to each plug (more specifically, the number of connections established through the plug, the identification(ID) information of the device connected to the plug, etc.), and further controlling of updating the contents stored in the plug register in accordance with the change of the connection through the plug.

Each device has data rate capability unique thereto as a data rate at which the data can be transmitted, and according to IEEE 1394 standard, a group of devices having different data rates are permitted to coexist on a single serial bus. A receiving device for receiving information, for example, cannot receive the data transmitted at a data rate higher than the data rate capability of the particular receiving device. In establishing the connection between a given group of devices, therefore, the actual data rate is set in a plug register, taking into account the data rate capability of each of all the devices in the group (maximum data rate at which data can be transmitted or received between the devices), and the data are transmitted at the data rate thus set. In such a case, as high a data rate as possible is set to efficiently use the band of the serial bus.

According to the IEEE 1394 standard, the information from each device is collected and transmitted in units called the isochronous cycle (where "cycle" means one cycle divided and formed by time division on the serial bus). The isochronous cycle includes an isochronous transmission field having the information transmitted in synchronism with the information contained in other isochronous cycles (specifically, the image information or the audio information and the like), and an asynchronous transmission field having the information transmitted asynchronously with other information (specifically, the control information and the like for controlling the output and the like of the image information or the audio information). The information in the isochronous transmission field are arranged by time division among different channels so that different information is transmitted in different channels.

In the isochronous transmission field, the time length of the isochronous transmission field in one isochronous cycle is standardized at 100 μsec at maximum, and therefore, the total time occupied by the information assigned to the channels in a given isochronous transmission field for transmission is also required to be set to 100 μsec or less. The transmission time occupied by a particular channel in the isochronous cycle is defined as a band (transmission occupied time).

According to the IEEE 1394 standard, when the connection is already established between a given group of devices, a new connection can be overlaid (i.e., overlay connection) for the same plug register of a transmitting device with a new receiving device, and thus the isochronous resource of the already established connection can be used as it is. In this case, in addition to the receiving device in the already established connection, the receiving device in the newly established overlay connection can also receive the isochronous data output from the same transmitting device without securing a new band.

The IEEE 1394 standard for the conventional overlay connection, however, fails to assume a case in which a device having data rate capability different from the data rate set in the existing connection is newly connected.

For example, when the data rate set for the connection already established is higher than the data rate capability of the receiving device intended for overlay connection, therefore, the issue is posed that the overlay connection cannot be established between the devices. Another issue is that even if the overlay connection is established, the required isochronous data cannot be received actually.

SUMMARY OF THE INVENTION

This invention has been achieved in consideration of these issues, and one object of the invention is, for example, to provide a data rate setting apparatus, a data rate setting method, and an information recording medium in which a program to execute the data rate setting method is recorded, capable of transmitting information between devices even when a device of relatively low data rate capability is connected.

A data rate setting apparatus according to the present invention is characterised by the features set forth in claim 1.

A data rate setting method according to the present invention is characterized by the features set forth in claim 7.

A data rate setting program according to the present invention is characterized by the features set forth in claim 8.

BRIEF DESCRIPTION OF THE DRAWINGS

Fig. 1 is schematic diagram showing a data transmission system;
Fig. 2 is a diagram showing an address map of a plug register;
Fig. 3 is a diagram showing the data format of an oMPR;
Fig. 4 is a diagram showing the data format of an iMPR;
Fig. 5 is a diagram showing the data format of an oPCR;
Fig. 6 is a diagram showing the data format of an iPCR;
Fig. 7 is a flowchart showing the flow of the process for establishing a p2p (point-to-point) connection;
Fig. 8 is a flowchart showing the flow of the conventional process for establishing an overlay connection;
Fig. 9 is a diagram showing an example of connection of devices based on IEEE 1394 standard;
Fig. 10 is a diagram showing another example of the connection of devices based on the IEEE 1394 standard;
Fig. 11 is a diagram showing a general configuration of an information transmission system S;
Fig. 12 is a flowchart showing a flow of process for setting the data rate according to a first embodiment; and
Fig. 13 is a flowchart showing a a flow of process for setting the data rate according to a second embodiment.

DESCRIPTION OF THE PREFERRED EMBODIMENTS

Embodiments of the invention are described below with reference to the accompanying drawings. Each embodiment described below represents a case in which the present invention is applied to the transmission control process executed on a transmitting device and a receiving device for transmitting and receiving the required data according to IEEE 1394 standard.

(I) Outline of information transmission based on IEEE 1394 standard

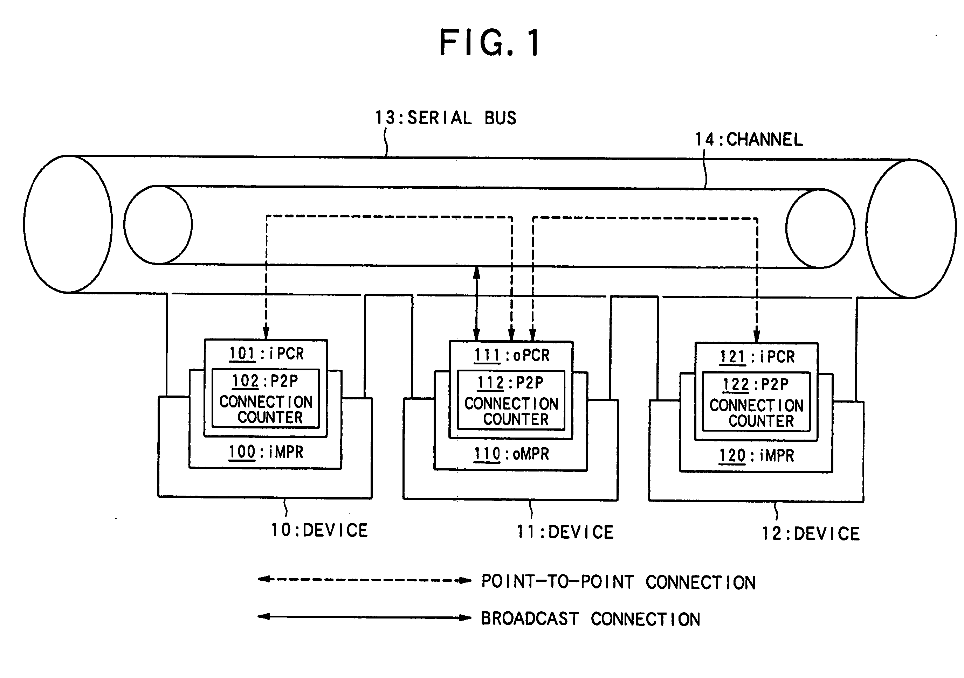

Prior to explaining embodiments of the invention specifically, an outline of the information transmission based on the IEEE 1394 standard is generally explained with reference to Figs. 1 to 10.

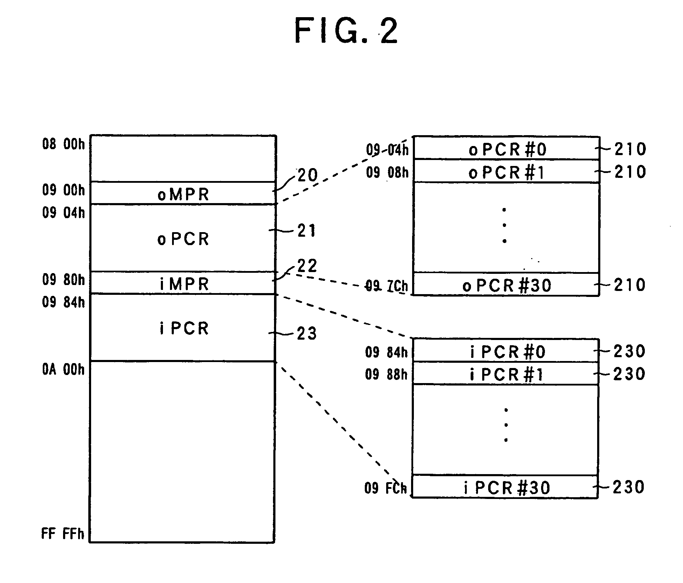

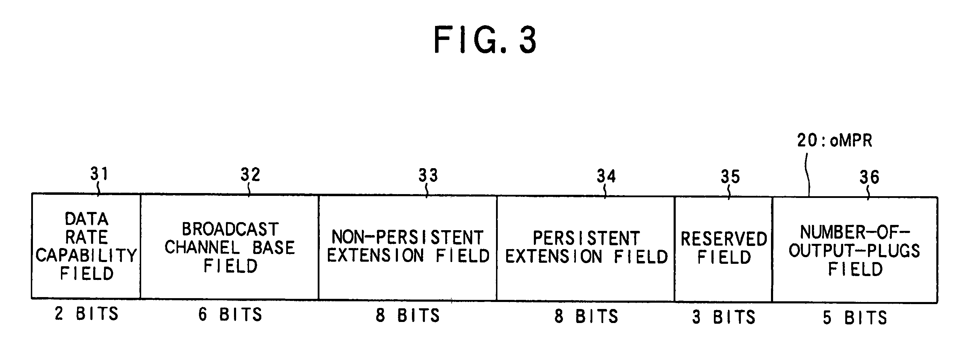

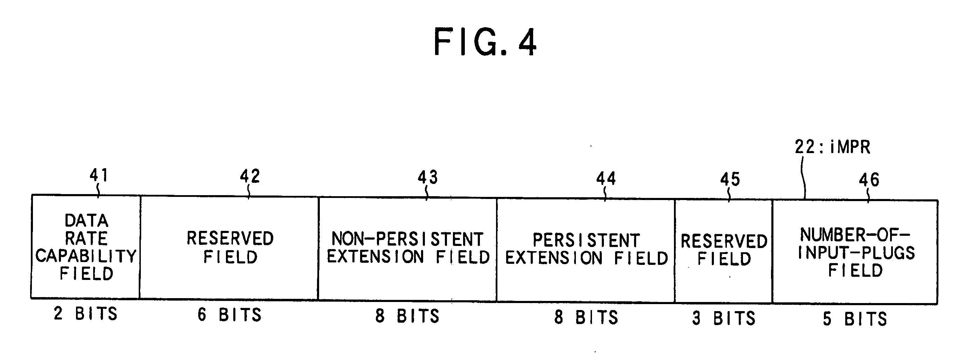

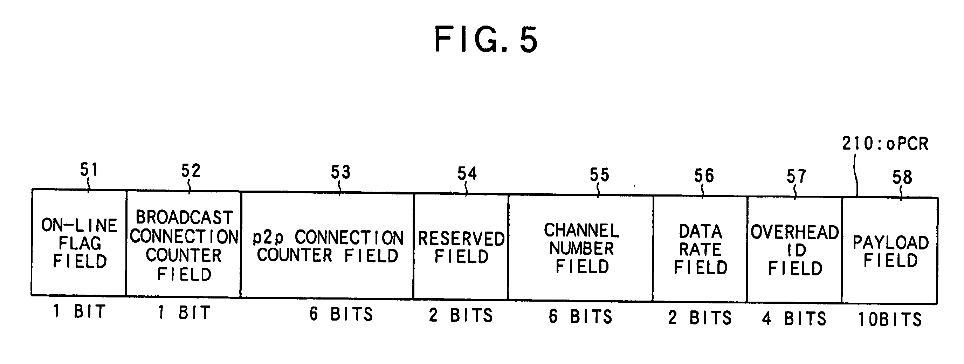

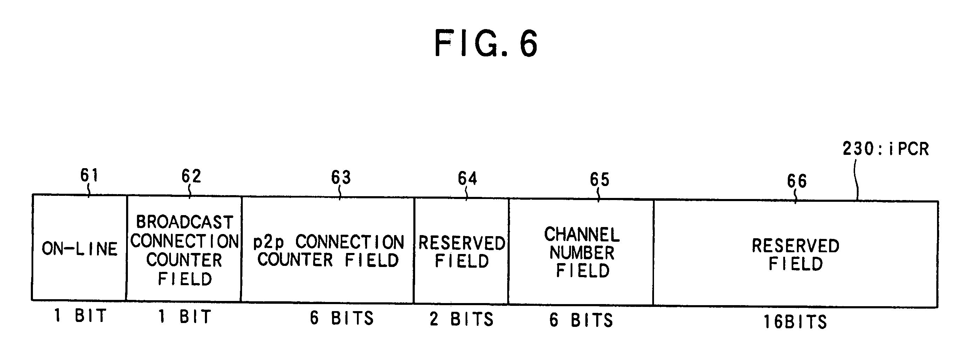

Fig. 1 is a diagram showing the concept of a data transmission system capable of transmitting the data to and from a plurality of information transmission devices connected on a bus according to IEEE 1394 standard as a network. Fig. 2 is a diagram showing an address map of the plug register. Fig. 3 is a diagram showing a data format of an output master plug register on the output side (hereinafter, referred to as oMPR). Fig. 4 is a diagram showing a data format of an input master plug register on the input side (hereinafter, referred to as iMPR). Fig. 5 is a diagram showing a data format of an output plug control register constituting a plug register on the output side (hereinafter, referred to as oPCR). Fig. 6 is a diagram showing a data format of an input plug control register constituting a plug register on the input side (hereinafter, referred to as iPCR).

As described above, according to the IEEE 1394 standard, the concept of the plug for logical signal connection is introduced to replace the conventional physical signal connection between the information transmission devices. The operation of transmitting or receiving the data on a bus according to IEEE 1394 standard, therefore, is controlled through a hypothetical plug of each information transmission device.

Fig. 1 shows an example in which three devices 10, 11 and 12 are connected as information transmission devices on the bus according to the IEEE 1394 standard. Each of devices 10 to 12 hypothetically has an output plug used for data output and an input plug used for data input. The isochronous data is sent out to the bus through the output plug of a specified device, and received through the input plug of another specified device thereby to transmit the data between the specified devices.

More specifically, as shown in Fig. 1, the device 11 includes an output plug control register (oPCR) 111 for controlling the attributes of the output plug, and an output master plug register (oMPR) 110 indicating the attributes common to the oPCR of the devices.

The device 10 includes an input plug control register (iPCR) 101 indicating the attribute of the input plug, and an input master plug register (iMPR) 100 for controlling the attribute common to the iPCR of the devices. In a similar fashion, the device 12 includes an iPCR 121 and an iMPR 120.

The isochronous data is transmitted between the devices through an isochronous channel (hereinafter, referred simply to as a "channel") set on an IEEE 1394 serial bus as a network, as shown in Fig. 1. Fig. 1 shows an example in which the device 11 has one oMPR and one oPCR, while each of the devices 10 and 12 has one iMPR and one iPCR, and one systematic channel 14 is established to connect the devices 10 to 12.

This channel 14 functions as a path for connecting the iPCR and the oPCR of each device, and by setting each PCR properly, the desired channel 14 can be set. The types of connection of each device to the channel 14 include two kinds of the point-to-point (p2p) connection and the broadcast connection.

The p2p connection is a type of connection in which one oPCR of a specified device and one iPCR of another device are connected to one channel. The p2p connection is used, for example, when the one-to-one device connection such as in dubbing music information requires protection. As described later, it is also possible to overlay another p2p connection on the p2p connection already existing in one PCR.

Fig. 1 shows a case in which the oPCR 111 of the device 11 and the iPCR 101 of the device 10 are connected to one channel 14 to establish the p2p connection, and further the overlay connection is established by use of the same channel 14 between the oPCR 111 of the device 11 and the iPCR 121 of the device 12.

The broadcast connection has two types of connections including the broadcast-out connection for connecting one oPCR of a specified device to one isochronous channel, and the broadcast-in connection for connecting one iPCR of a specified device to one channel. The broadcast connection shown in Fig. 1 is an example of the broadcast-out connection for connecting the oPCR 111 of the device 11 to one channel 14.

Now, the data format of the plug register is explained.

The IEEE 1394 standard described above stipulates that when the packet communication of the required data according to this standard is done between a plurality of devices, the address indicating the data write destination in the data receiving end connected to a serial bus as a network, and the address indicating the data read source in the data transmitting end are described in a 64-bit wide address space based on IEEE 1212 standard. The 10 most significant bits in the address space represent the bus ID (i.e., ID information for identifying each serial bus connecting the serially connected devices), and the following 6 bits represent the device number (i.e., the ID information for identifying the serially connected devices). The 16-bit information including the bus ID and the device number is defined as a device ID.

Further, the 48 bits following the device ID make up an address space indicating the storage address in a memory or the like in the device having the particular device ID. The fields in the memory or the like indicated by the 20 most significant bits in the 48-bit address space is roughly divided into a private space usable freely in response to a read request or the like closed (completed) in one device, and an initial address or the like used to exchange information between the devices.

In the 28-bit address space following the 20 bits, the field ranging from the address "0900h" ("h" designates a hexadecimal digit) to "09FFh" indicated on the left side in Fig. 2 is defined as a field for the plug register (PCR) according to IEC-61883 Part 1 standard.

As described above, the plug register is an entity in which the concept "of plug" is implemented in a register to logically form a signal path analogous to the conventional analog interface at the time of controlling the data transmission to each device through the serial bus and the interface of each device connected by the serial bus.

As shown in Fig. 2, each device includes an oMPR 20 indicating the information for the output plug unique to the device, and an iMPR 22 indicating the information for the input plug. Further, each device includes an oPCR 21 indicating the attribute of the output plug and an iPCR 23 indicating the attribute of the input plug.

Each device never has a plurality of oMPRs 20 and iMPRs 22, but may have a plurality of oPCRs 21 and iPCRs 23.

More specifically, as shown in Fig. 2, each device can include a maximum of 31 oPCRs 210 and iPCRs 230. The flow of data as the isochronous data between the devices connected to each other is controlled by updating each plug register corresponding to each of the plugs.

The oMPR 20, iMPR 22, oPCR 210 and iPCR 230 are each defined as a register space having a width of 32 bits, and the interior thereof is segmented into a plurality of fields.

Next, the data format indicating the description of the oMPR 20, iMPR 22, oPCR 210 and iPCR 230 is explained specifically with reference to Figs. 3 to 6.

As shown in Fig. 3, the oMPR 20 is configured of a data rate capability field 31, a broadcast channel base field 32, a non-persistent extension field 33, a persistent extension field 34, a reserved field 35, and a number-of-output-plugs field 36.

The data rate capability field 31 is a field to designate the data rate as the maximum data rate of the isochronous data transmissible by the self-device. More specifically, according to IEEE 1394a-2000 standard, the data rates of S100 (100 Mbps), S200 (200 Mbps) and S400 (400 Mbps) are defined, and are encoded as "00b", "01b" and "10b", respectively, in the fields.

The broadcast channel base field 32, on the other hand, is a field to designate the channel constituting a base for determining the channel number for establishing the broadcast-out connection for each oPCR. More specifically, assuming that the value of the broadcast channel base 32 is B, the channel number N of the broadcast-out connection established for each oPCR is determined by the equations below.

[Equation 1]

$$\text{If } B < 63, \text{ then } N = (B + i) \bmod 63;$$
$$\text{If } B = 63, \text{ then } N = 63.$$

Further, the non-persistent extension field 33, the persistent extension field 34 and the reserved field 35 are fields defined for future extension, while the number-of-output-plugs field 36 is a field to designate the number of oPCRs belonging to the particular device.

Next, as shown in Fig. 4, the iMPR 22 is configured of a data rate capability field 41, a non-persistent extension field 43, a persistent extension field 44, reserved fields 42, 45, and a number-of-input-plugs field 46.

The data rate capability field 41 is a field to indicate the maximum data rate of the isochronous data receivable by the self-device.

Also, the non-persistent extension field 43, the persistent extension field 44 and the reserved fields 42, 45 are fields defined for future extension, while the number-of-input-plugs field 46 is a field to indicate the number of iPCRs belonging to the self-device.

Next, as shown in Fig. 5, the oPCR 210 is configured of an on-line field 51, a broadcast connection counter field 52, a p2p (point-to-point) connection counter field 53, a reserved field 54, a channel number field 55, a data rate field 56, an overhead ID field 57, and a payload field 58.

The on-line field 51 is a field to indicate whether the output plug corresponding to the oPCR 210 is on line (=1) or off line (=0), and the broadcast connection counter field 52 is a field to indicate the number of the broadcast-out connections formed through the output plug corresponding to the oPCR 210 thereof. Further, the p2p connection counter field 53 is a field to indicate the number of the p2p connections formed through the output plug corresponding to the oPCR 210 thereof. The reserved field 54 is a field for future extension of functions.

The channel number field 55 is a field to indicate the channel number used for transmission of isochronous data. The data rate field 56 is a field to indicate the data rate at which the data is transmitted. The overhead ID field 57 is a field to indicate the overhead amount added to the isochronous data. The payload field 58 is a field to indicate the amount of the isochronous data transmitted in one cycle.

Assuming that the band required for the flow of the isochronous data transmitted is designated as BWU, the band BWU is calculated from the equations below using the values described in the overhead ID field 57 and the payload field 58 or the like.

[Equation 2]

$$\text{If overhead ID} > 0, \text{then BWU} = \text{overhead ID} \times C + (\text{payload} + K) \times DR;$$

$$\text{If overhead ID} = 0, \text{then BWU} = 512 \times C + (\text{payload} + K) \times DR,$$

where "DR" is a data rate coefficient, which is "16" for S100, "8" for S200, and "4" for S400. Also, "C" and "K" are constants which assume the values of 32 and 3, respectively.

In establishing the connection, the band BWU is secured from the BANDWIDTH_AVAILABLE register of an IRM (isochronous resource manager). The IRM is a device for managing the communication states (specifically, the channel and the band used by each device) of all the devices in the tree formed, and indicating the band currently occupied by each device and the current channel used by another device in an identifiable manner.

As shown in Fig. 6, the iPCR 230 is configured of an on-line field 61, a broadcast connection counter field 62, a p2p (point-to-point) connection counter field 63, reserved fields 64, 66, and a channel number field 65.

The on-line field 61 is a field to indicate whether the input plug corresponding to the iPCR 230 is on line or off line. The broadcast connection counter field 62 is a field to indicate the number of the broadcast connections formed through the input plug corresponding to the iPCR 230. The p2p connection counter field 63 is a field to indicate the number of the p2p connections formed through the input plug corresponding to the iPCR 230. The reserved fields 64, 66 are fields for future extension of the function. The channel number field 65 is a field to indicate the channel number used for transmission of isochronous data.

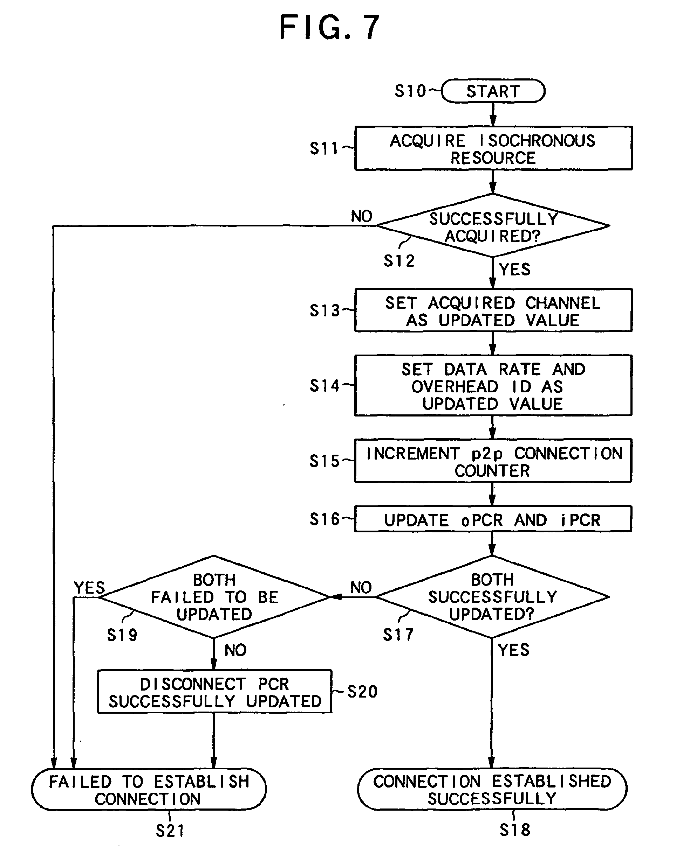

Now, taking the case of Fig. 1 as an example, a specific process flow for establishing the p2p connection is explained with reference to Fig. 7.

Fig. 7 is a flowchart showing a process flow for establishing the p2p connection between the devices 10 and 11.

First, the device 11 as a controller executes the process for acquiring the isochronous resources (channel and band) from the CHANNELS_AVAILABLE register and the BANDWIDTH_AVAILABLE register of the IRM (not shown) existing on the serial bus 13 (step S11). The CHANNELS_AVAILABLE register is a 64-bit register for indicating the occupation of the channel, and holds data for 64 channels, indicating that a channel is occupied if "0", and not occupied if "1". The BANDWIDTH_AVAILABLE register, on the other hand, is a register for storing a numerical value indicating the band usable for isochronous transmission, and expressed in time units (each about 20 nsec) each indicating the time required to transmit 32-bit data at the data rate of 1600 Mbps.

Specifically, the device 11 issues a lock transaction to the IRM, and by updating the CHANNELS_AVAILABLE register and the BANDWIDTH_AVAILABLE register, secures the channel 14 and the band as desired. One IRM is selected from the devices having the IRM capability on one bus after a bus is reset.

Returning to the flow of Fig. 7, after the process at step S11, the device 11 determines from the transmitted contents whether the isochronous resources are successfully acquired or not (step S12).

When the desired channel 14 and the desired band are not secured, and it is determined that the isochronous resources have failed to be acquired (No at step S12), the establishment of the p2p connection is considered to have ended in failure, and the process is terminated (step S21).

When it is determined at step S12 that the isochronous resources have successfully been acquired (Yes at step S12), on the other hand, the acquired channel 14 is set as an updated value of the oPCR 111 of the device 11 and the iPCR 101 of the device 10 (step S13).

In addition, the data rate and the overhead ID are set as an updated value of the oPCR 111 of the device 11 (step S14). The data rate thus set is determined in accordance with the data rate capability of the device 11 at transmitting end and the device 10 at receiving end.

The p2p connection counter 112 of the device 11 and the p2p connection counter 102 of the device 10 are incremented and set as the updated values, respectively, (step S15), and the process for updating the oPCR 111 of the device 11 and the iPCR 101 of the device 10 is executed by lock transaction, using the respective updated values (step S16).

The device 11 determines whether the oPCR 111 and iPCR 101 have been successfully updated or not (step S17).

When it is determined that both the oPCR 111 and the iPCR 101 have been successfully updated (Yes at step S17), the establishment of the p2p connection is considered successful, and the process is terminated (step S18).

When it is determined at step S17 that at least one of the oPCR 111 and the iPCR 101 has failed to be updated (No at step S17), it is determined whether both the oPCR 111 and the iPCR 101 have failed to be updated (step S19).

When it is determined that both the oPCR 111 and the iPCR 101 have failed to be updated (Yes at step S19), the process is executed by determining that the p2p connection has failed to be established (step S21).

When it is determined at step S19 that one of the oPCR 111 and the iPCR 101 has failed to be updated (No at step S19), the process for disconnection is executed for the oPCR 111 or the iPCR 101, whichever is updated successfully (step S20). Specifically, the p2p connection counter for the oPCR 111 or the iPCR 101 which has been successfully updated is decremented, and when the particular p2p connection counter becomes to "0" as the result of decrement, it indicates the absence of connection. Thus, the process is executed to return to the IRM the isochronous resources that have thus far been used for the oPCR 111 or the iPCR 101 successfully updated. After that process, the establishment of the p2p connection is regarded as failed, and the process is terminated (step S21).

In Fig. 1, the p2p connection for data transmission from the device 11 to the device 10 is established as indicated by dashed line on the left side in Fig. 1, and the channel 14 for data transmission is shown hypothetically in the serial bus 13.

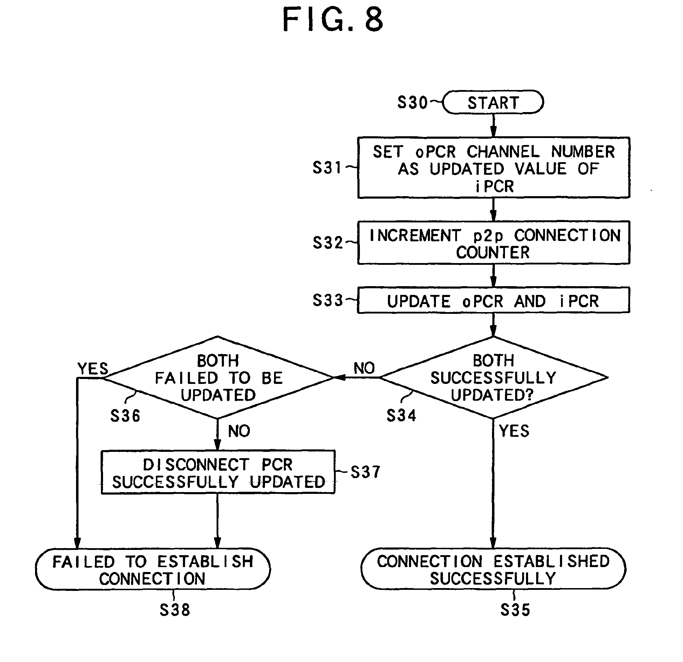

Now, on the assumption that the p2p connection is established between the device 10 and the device 11 in Fig. 1 by the process described above, the conventional process for overlaying a new connection for the connection is explained below with reference to Fig. 8. Fig. 8 is a flowchart showing the process flow for establishing the conventional overlay connection.

First, the device 12 as a controller checks the channel number of the oPCR 111 of the device 11 intended for overlay connection, and sets the channel number as an updated value of the iPCR 121 of the device 12 (step S31).

The device 12 then increments the p2p connection counter 112 of the oPCR 111 of the device 11 and the p2p connection counter 122 of the iPCR 121 of the device 12, and sets the values after increment as updated values, respectively (step S32). The process is executed for updating the oPCR 111 of the device 11 and the iPCR 121 of the device 12 with the updated values thus set (step S33).

The device 12 determines whether the oPCR 111 and the iPCR 121 have been successfully updated or not (step S34).

When it is determined that both the oPCR 111 and the iPCR 121 have been successfully updated (Yes at step S34), the process is executed on the assumption that the overlay connection is established (step S35). Thus, in addition to the device 10 for which the p2p connection has been already established, it becomes possible for the device 12 for which the overlay connection is newly established, to receive the isochronous data output from the same device 11 through the channel 14.

In this case, the data rate at which the data is transmitted to the device 12 connected by overlay is equal to the data rate for the channel 14 used for the p2p connection already established.

Returning to step S34, when it is determined that at least one of the oPCR 111 and the iPCR 121 has failed to be updated (No at step S34), it is determined whether both the oPCR 111 and the iPCR 121 have failed to be updated or not (step S36).

When both the oPCR 111 and the iPCR 121 have failed to be updated (Yes at step S36), it is determined that the p2p overlay connection has failed to be established, and the process is executed accordingly (step S38).

When it is determined at step S36 that at least one of the oPCR 111 and the iPCR 121 has failed to be updated (No at step S36), the process is executed to disconnect the oPCR 111 or the iPCR 121, whichever is successfully updated (step S37). Specifically, the p2p connection counter 122 for the oPCR 111 or the iPCR 121 successfully updated is decremented, and when the result of decrement shows that the value on the p2p connection counter decremented is "0", it indicates the absence of connection in the plug after updating. Therefore, the process is executed to return to the IRM the isochronous resource that has thus far been used. After this returning process, the overlay connection is regarded as failed to be established, and the process is terminated (step S38).

In the manner described above, the overlay connection is established, and the data is transmitted between the device 11 and the device 12 connected by the serial bus 13.

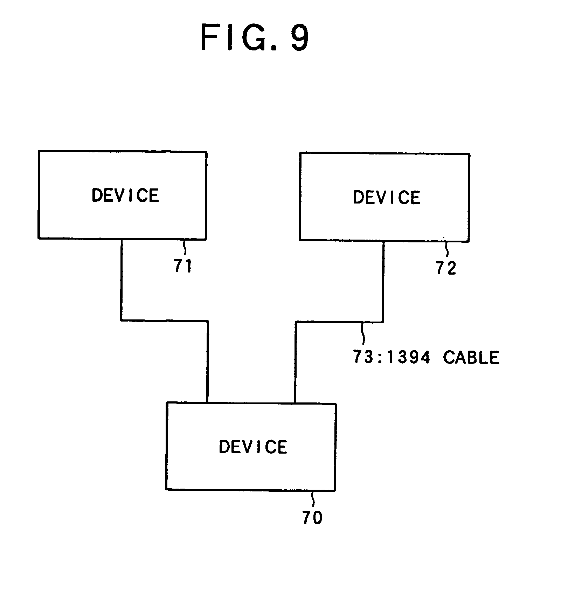

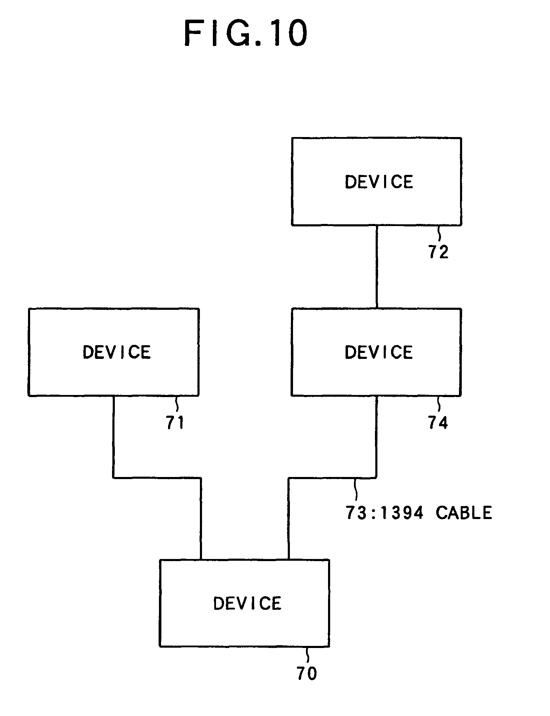

Next, an example of connection possible by the connection establishing process described above is explained with reference to Figs. 9 and 10.

Fig. 9 is a diagram showing an example of connection of the devices according to the IEEE 1394 standard, and Fig. 10 is a diagram showing another example of connection of the devices according to the IEEE 1394 standard.

As shown in Fig. 9, for example, it is assumed that a device 71 constituting a digital video tape recorder and a device 72 constituting a digital video tape recorder are physically connected by a 1394 cable 73 with a device 70 constituting a digital TV as a node at the top of a tree topology. The device 70, for example, plays the role of an IRM required to transmit the isochronous data on the serial bus.

As shown in Fig. 10, in addition to the configuration of Fig. 9, a device 74 constituting a digital video tape recorder, for example, is physically connected by the 1394 cable 73 between the device 70 and the device 72.

The device 74 is a device arranged on a physical path for isochronous data transmission between the device 70 as a transmitting device and the device 72 as a receiving device. Fig. 10 shows a case in which one device 74 is arranged on the physical path for isochronous data transmission between the transmitting device and the receiving device. However, a case is not limited to one device, and a plurality of devices may be arranged on the path. More specifically, the number of devices which can be included in a single system connected in a tree is 63 at maximum, and a maximum of 16 connections between two devices can be included in a single system.

The data rate is explained below.

In Fig. 9, when the p2p connection is established between the device 70 and the device 71 and the data rate capability of the device 70 and the device 71 are both S400, the data are transmitted by the devices 70 and 71 at the data rate of S400.

After that, when the overlay connection is established between the devices 70 and 72, the data are transmitted from the device 70 to the device 72 at the data rate of S400 already established. In this case, if the data rate capability of the device 72 is S400, it is equal to the data rate S400 of transmission from the device 70, therefore, the device 72 can receive the transmitted data.

On the other hand, when the data rate capability of the device 72 is S200, since it is lower than the data rate S400 at which the data is transmitted from the device 70, the device 72 cannot receive the data transmitted from the device 70.

Also, in Fig. 10, it is assumed that the p2p connection is established between the devices 70 and 71. When the data rate capability of the devices 70 and 71 are both S400, the data are transmitted between the devices 70 and 71 at the data rate of S400. When the overlay connection is established subsequently between the devices 70 and 72 through the device 74, the data are transmitted from the device 70 to the device 72, by establishing the overlay connection, at the previously established data rate of S400. In this case, if the speed of the physical layer of the device 74 existing on the path and the data rate capability of the device 72 are S400, it is the same as the data rate of S400 for transmission from the device 70. Therefore, the transmitted data can be received by the device 72 through the device 74.

When the speed of the physical layer of the device 74 is S200, on the other hand, it is lower than the data rate S400 for transmission from the device 70. Even if the data rate capability of the device 72 is S400, then the data transmitted from the device 70 can not be received by the device 72.

Next, specific embodiments of the invention implemented according to the IEEE 1394 standard are described.

(II) First embodiment

First, a first embodiment of the invention implemented according to the IEEE 1394 standard is explained.

According to this embodiment, an information transmission system is described, in which the function as a data rate setting apparatus according to the invention is applied to a device as a receiving device in establishing the overlay connection.

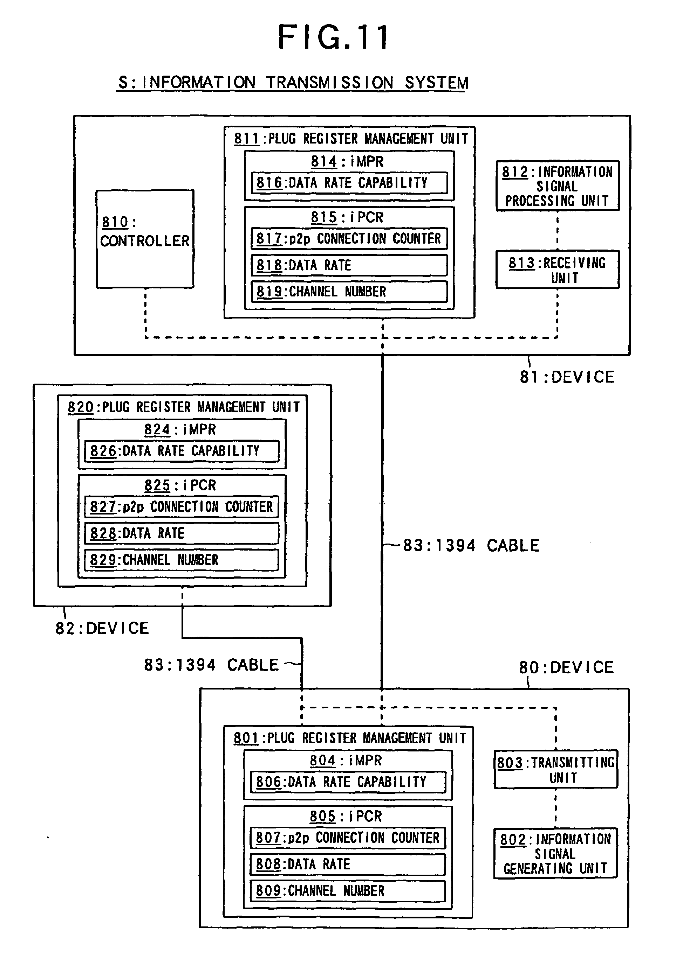

First, a general configuration of the information transmission system according to this embodiment for transmitting the information between a plurality of devices through a serial bus as a network is explained with reference to Fig. 11.

Fig. 11 is a diagram showing a general configuration of an information transmission system S according to this embodiment.

As shown in Fig. 11, the information transmission system S according to this embodiment comprises a device 80, a device 81 and a device 82 physically connected to each other through a 1394 cable 83. The p2p connection is established to transmit the information between the devices 80 and 82 through a serial bus as a network.

First, the configuration and the operation of the device 80 as a transmitting device are explained.

As shown in Fig. 11, the device 80 includes a plug register management unit 801, an information signal generating unit 802 and a transmitting unit 803.

The plug register management unit 801 logically includes an oMPR 804 and an oPCR 805. Further, the oMPR 804 has the data rate capability 806 as a field for storing a value indicating the maximum data rate at which the data can be transmitted by the device 80. The oPCR 805, in turn, includes the fields of the p2p connection counter 807 indicating the number of p2p connections established, the data rate 808 and the channel number 809.

Next, the operation of the transmitting device 80 is explained.

The plug register management unit 801 transmits and receives a control signal and the like to and from other devices through a serial bus as a network, and further executes the process of updating the oPCR 805. Also, the plug register management unit 801 instructs the transmitting unit 803 to start or stop the transmission of the isochronous packet data.

The information signal generating unit 802, on the other hand, is a block for generating the information to be transmitted including the audio information or the video information or the like. The transmitting unit 803 forms an isochronous packet based on the information from the information signal generating unit 802, and transmits it through a serial bus in response to an instruction of the plug register management unit 801.

Next, the configuration and the operation of the device 81 are explained.

The device 81 is a device to have the function of receiving the information from other devices, and also functions as a data rate setting apparatus according to this invention.

As shown in Fig. 11, the receiving device 81 includes a controller 810, a plug register management unit 811 as a detection device and a setting device, an information signal processing unit 812 and a receiving unit 813.

Also, the plug register management unit 811 logically includes an iMPR 814 and an iPCR 815 indicating the attribute of the input plug. Further, the iMPR 814 has a data rate capability 816 as a field for storing a value indicating the maximum data rate at which the device 81 can receive the data. The iPCR 815 includes the fields of the p2p connection counter 817 indicating the number of the p2p connections established, the data rate 818 and the channel number 819.

Next, the operation of the receiving device 81 is explained.

The controller 810 functions in the case where the connection with other devices connected on the serial bus is established on the side of the device 81. The controller 810 also supervises and controls the establishment of the connection.

The plug register management unit 811 transmits and receives a control signal or the like to and from other devices shown in Fig. 11 through the controller 810 and the serial bus. The plug register management unit 811 also executes the process for updating the iPCR 815, and further instructs the receiving unit 813 to start and stop receiving the isochronous packet data.

The controller 810 detects the values of the data rate 808 of the oPCR 805, the data rate capability 806 of the oMPR 804, and the data rate capability 826 of the iMPR 824 described later. The controller 810 also detects the speed of the physical layer of the device existing on the physical path of the isochronous data flow.

When the description of the oMPR 804, the iMPR 814, the oPCR 805 and the iPCR 815 of the plug register management unit 811 is referred to, the read transaction or the lock transaction included in the transactions defined under the IEEE 1394 standard is used.

The speed of the physical layer of the devices existing on the physical path of the isochronous data flow is detected by analyzing the self-ID packet transmitted from each device on the bus after reset of reset.

The controller 810 sets the data rate of the oPCR 805 of the device 80, and updates the oPCR 805 and the iPCR 815, based on the detected speed for the physical layer and the data rate capability of the transmitting device and the receiving device.

On the other hand, the receiving unit 813 receives the isochronous packet from the outside, and transmits it to the information signal processing unit 812. The information signal processing unit 812 is a block for processing the received isochronous packet as an information signal including the audio information or the video information or the like.

Next, the device 82 includes the plug register management unit 820, which in turn logically has an iMPR 824 and an iPCR 825 indicating the attribute of the input plug. Further, the iMPR 824 includes the data rate capability 826 as a field for storing a value indicating the maximum data rate at which the data can be received by the device 82. The iPCR 825 includes the fields for the p2p connection counter 827 indicating the number of the p2p connections established, the data rate 828 and the channel number 829.

Although the device 82 has a function as a receiving device, the device 82 is similar to the device 81, and therefore the configuration regarding the receiving function is not described.

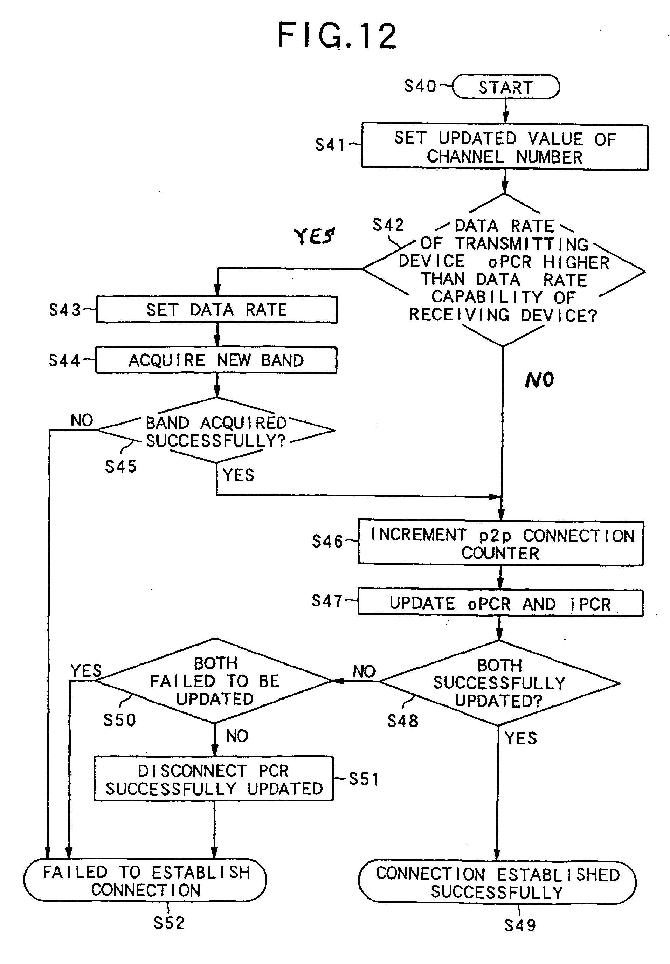

Now, the process for establishing the overlay connection setting the data rate according to this embodiment is explained with reference to Fig. 12 in detail.

Fig. 12 is a flowchart showing a flow of the process for establishing the overlay connection according to this embodiment.

First, in the information transmission system S, the device 81 refers to the oPCR 805 of the device 80, confirms the value of the channel number 809, and sets it as an updated value of the channel number 819 of the iPCR 815 of the device 81 (step S41).

The device 81 confirms the values of the data rate capability 816 of the iMPR 814 of itself and the data rate 808 of the oPCR 805 of the device 80, and determines whether the value of the data rate 808 exceeds the value of the data rate capability 816 of the iMPR 814 (step S42).

When another device exists on the physical path between the receiving device and the transmitting device, the determination at step S42 includes the detection and comparison of not only the values of the data rate capability 816 and the data rate 808 of the iMPR 814 but also the speed of the physical layers of all the devices existing on the physical path. The comparative determination process in a case where another device exists on the physical path between the receiving device and the transmitting device is explained in detail later.

It is assumed that it is determined at step S42 that the value of the data rate 808 of the device 80 exceeds the data rate capability 816 of the device 81 (Yes at step S42). The device 81 cannot receive the data at the data rate, and therefore a data rate at which the data can be received by the device 81 is newly set (step S43).

When the plug register management unit 811 sets a new data rate to make possible the transmission of the isochronous data from the device 80 to the receiving device 81, the data rate capability 806 of the device 80 and the data rate capability 816 of the device 81 are taken into consideration.

The controller 810 selects the lower one of the data rate capability 806 of the device 80 and the data rate capability 816 of the device 81, and sets it as an updated value of the data rate 808 of the oPCR 805 of the device 80.

When the data rate capability 806 of the device 80 is lower than the data rate capability 816 of the device 81, the data can be transmitted only at a data rate not higher than the data rate capability 806.

When the data rate capability 816 of the device 81 is lower than the data rate capability 806 of the device 80, on the other hand, the data can be transmitted only at a data rate not higher than the data rate capability 816 of the device 81.

Further, when the data rate capability 806 of the device 80 is equal to the data rate capability 816 of the device 81, the data can be transmitted only at a data rate not higher than the equal data rate capability.

In the configuration of Fig. 11, therefore, assuming that the data rate capability 806 of the device 80 is S400 and the data rate capability 816 of the device 81 is S200, for example, the plug register management unit 811 sets the data rate not higher than S200 of the data rate capability 816 of the device 81 as a data rate to be updated.

By referring to the value of the present data rate 808 of the device 80, the overhead ID not shown, and the payload value, the currently used band is calculated, and further the band to be acquired newly is calculated from the newly set data rate, the overhead ID and the payload value (step S44).

In the case where the newly set data rate is determined at a value lower than the value of the present data rate 808 of the device 80, the band required in a case of change to the newly set data rate is increased. For this reason, the currently used band is subtracted from the newly required band to calculate an additionally required band, and the process is executed to acquire the additional band from the IRM.

Then, it is determined whether the band is uccessfully acquired from the IRM (step S45).

When it is determined that the band is successfully acquired (Yes at step S45), the incremented values of the p2p connection counter 807 of the device 80 and the p2p connection counter 817 of the device 81 are set as newly updated values (step S46). By these updated values, the process of updating the oPCR 805 of the device 80 and the iPCR 815 of the device 81 is executed(step S47).

Then, it is determined whether the oPCR 805 and the iPCR 815 are both updated successfully or not (step S48).

When it is determined that the oPCR 805 and the iPCR 815 are both updated successfully (Yes at step S48), the process is executed on the assumption that the p2p overlay connection has been established (step S49).

When it is determined at step S48 that at least one of the oPCR 805 and the iPCR 815 has failed to be updated (No at step S48), on the other hand, it is determined whether both the oPCR 805 and the iPCR 815 have failed to be updated or not (step S50).

When it is determined that both the oPCR 805 and the iPCR 815 have failed to be updated (Yes at step S50), the process is executed on the assumption that the p2p overlay connection has failed to be established (step S52).

When it is determined at step S50 that one of the oPCR 805 and the iPCR 815 has failed to be updated (No at step S50), the process is executed to disconnect the oPCR 805 or the iPCR 815, whichever has been successfully updated (step S51). Specifically, the p2p connection counter of the oPCR 805 or the iPCR 815, whichever has been successfully updated, is decremented, and when the value of the p2p connection counter as a result of decrement becomes to "0", it indicates the absence of the p2p connection. Thus, the process is executed to return to the IRM the isochronous resource that has been thus far used in the oPCR 805 successfully updated. After this returning process, the process is terminated assuming that the p2p overlay connection has failed to be established (step S52).

It is assumed that it is determined at step S42 that the value of the data rate 808 of the device 80 is not higher than the value of the data rate capability 816 of the device 81 (No at step S42). In view of the fact that the data can be transmitted by the device 81 at the data rate, the process proceeds to step S46 without changing the data rate.

When it is determined at step S45 that the band has failed to be acquired (No at step S45), on the other hand, the process is terminated on the assumption that the overlay connection for the p2p connection has failed to be established (step S52).

As described above, according to this embodiment, the device 81 is connected as a data rate setting apparatus to the serial bus as a network to transmit or receive the information by establishing connection between a plurality of the devices. Then, in establishing the connection on the serial bus with the device 80 as a transmitting device, the device 81 detects the information transmission rate at which the device 80 transmits the information, and the information transmission rate at which the device 81 can receive the information. Based on the information transmission rates thus detected, the information transmission rate at which the device 80 transmits the information is set as the information transmission rate at which the device 81 can receive the information. Even if a device of a relatively low data rate capability is connected, therefore, the data can be received by the device having a low data rate capability.

The data rate setting apparatus according to this embodiment is of course applicable also to the connection shown in Fig. 10, i.e., to a case in which another device exists on the physical path of the isochronous data flow between the transmitting device and the receiving device. In this case, for example, the device 72 shown in Fig. 10 is caused to function as a data rate setting apparatus according to this embodiment. In the flowchart of Fig. 12, when the process is executed to set the data rate at step S43, the data rate at which the data can be transmitted is affected by the speed of the physical layer of the device 74 existing on the physical path as well as by the data rates in the link layers of the device 70 as a transmitting device and the device 72 as a receiving device.

For this reason, not only the topology between the devices 70 and 72 but also the data rate capability of the devices 70 and 72 are taken into consideration. In view of the fact that the device 74 simply exists on the physical path, the data rate capability of the link layer of the device 74 is not required to be taken into consideration.

In this case, therefore, the controller 810 detects the speed of the physical layer of the device 74 existing on the physical path of the isochronous data flow.

The lowest one among the detected speed of the physical layer, the data rate capability of the device 70, and the data rate capability of the device 72 is selected as a data rate, and is set as an updated value of the data rate of the device 70.

When the speed of the physical layer of the device 74 is lower than the data rate capability of the device 70 and the data rate capability of the device 72, the data can be transmitted only at a data rate not higher than the speed of the physical layer as described above.

When the data rate capability of the device 70 is lower than the speed of the physical layer of the device 74 and the data rate capability of the device 72, on the other hand, the data can be transmitted only at a data rate not higher than the data rate capability of the device 70.

Further, when the data rate capability of the device 72 is lower than the speed of the physical layer of the device 74 and the data rate capability of the device 70, the data can be transmitted only at a data rate not higher than the data rate capability of the device 72.

Furthermore, when the speed of the physical layer of the device 74, the data rate capability of the device 70 and the data rate capability of the device 72 are all equal to one another, the data can be transmitted at a data rate not higher than the equal data rate capability.

Therefore, in the configuration shown in Fig. 10, for example, when the data rate capability of the device 70 is S400, the data rate capability of the device 72 is S400 and the speed of the physical layer of the device 74 is S200, then the plug register management unit sets a data rate not higher than S200 as a data rate to which the speed of the physical layer of the device 72 is to be updated.

Even when another device exists on the physical path between the transmitting device and the receiving device at the time of overlay connection, as described above, the data rate setting apparatus according to this embodiment can set a data rate at which the data can be transmitted, by taking into consideration the speed of the physical layer of another device.

Also, the invention is not limited to a case in which the number of another device existing on the physical path between the transmitting device and the receiving device is one, but is applicable to a case in which a plurality of devices exist on the physical path. When a plurality of devices exist between the device 80 and the device 81, for example, the controller 810 sets a new information transmission rate by detecting the data rate capability 816 of the iMPR 814 of the receiving device, the data rate 808 of the oPCR 805 of the device 80, and the speed of the physical layers of all the other devices existing on the physical path between the transmitting device and the receiving device.

Although the embodiment described above has been explained in which the invention is applied to a case in which the respective devices are connected through a serial bus as an example of a network, the invention is also applicable to a network in which respective nodes are connected by parallel bus or radio communication.

Also, although the above explanation has been made about a case in which the overlay connection is established from the receiving device to a device at the transmitting end, the invention is applicable to a case in which the overlay connection is established between the transmitting device and the receiving device by another device (specifically, the controller of another device) than the transmitting device and the receiving device.

Further, although the explanation has been made about an application of the device 81 as a receiving device to a data rate setting apparatus according to this invention, the data rate setting apparatus according to the invention is not limited to the receiving device, it is, of course, possible that the data rate setting function is added to any one of the devices existing on the network, or that a data rate setting apparatus which has only the data rate setting function is provided.

The device 80 at the transmitting end, when making a request to establish the connection using an AV/C command (formally called the AV/C digital interface command), may function as a data rate setting apparatus according to this embodiment, and operate to change the data rate setting by securing a band.

The AV/C command is a command set used for remote control of the device connected by a network such as IEEE 1394.

When the device 80 makes a request to the device 81 at the receiving end to establish the connection using the AV/C command, the p2p connection counter is incremented by the device 81 for establishing the overlay connection in response to the AV/C command.

(III) Second embodiment

Next, a second embodiment of the invention is explained.

Although in the first embodiment described above a case has been explained in which the data rate between the devices is set at a relatively low rate, the second embodiment described below relates to a case in which the data rate after cutting off the overlay connection established in the first embodiment is returned to the data rate before the establishment of the overlay connection.

More specifically, the device 80 of the information transmission system is used as a data rate setting apparatus according to the invention. In this case, the plug register management unit 801 of the device 80 functions as a detection device and a setting device according to the second embodiment.

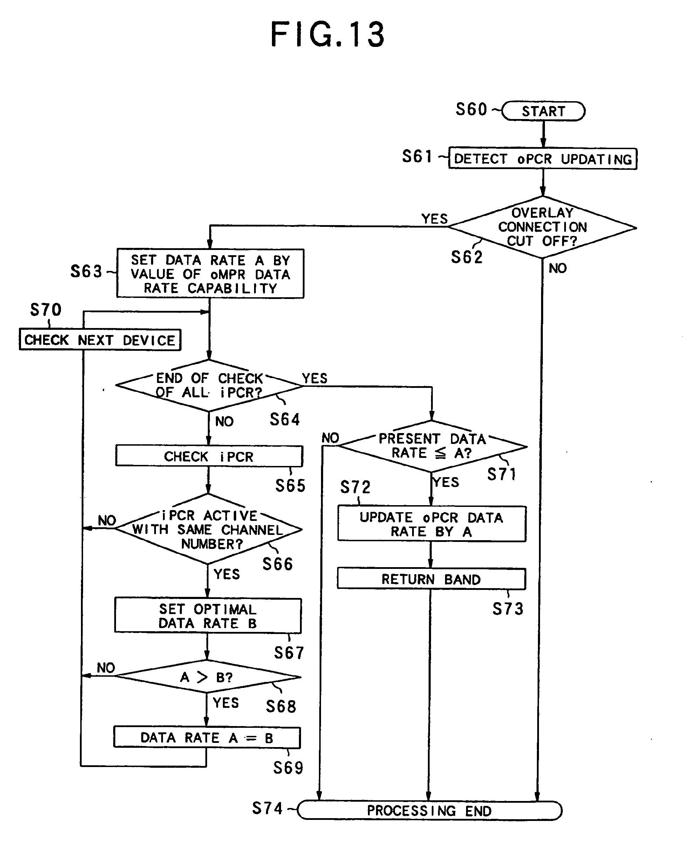

The data rate setting process according to this embodiment is explained with reference to Fig. 13. Fig. 13 is a flowchart showing the flow of the data rate setting process in which the device 80 changes the data rate and returns the unrequired band when the overlay connection is abandoned.

First, the plug register management unit 801 of the device 80 detects an event in which the value of the oPCR 805 of the device 80 itself is updated (step S61).

When the updating of the value of the oPCR 805 of the device 80 is detected, it is determined whether the overlay connection has been cut off or not (step S62). That is, when the value on the p2p connection counter 807 of the oPCR 805 is decremented, and the value after decrement is not "0", it is determined that the overlay connection has been cut off.

When it is determined that the overlay connection is not cut off (No at step S62), on the other hand, the process is terminated in view of the fact that, for example, a new connection is established or the process is not a process to be executed in the data rate setting process according to this embodiment (step S74).

When it is determined at step S62 that the overlay connection is cut off (Yes at step S62), a data rate A to be newly set on the data rate 808 of the oPCR 805 is set to the value of the data rate capability 806 of the oMPR 804 (step S63).

It is then determined whether the process of checking the iPCR for all the devices existing on the bus has been completed or not (step S64). When the device to be checked is limited to a device for which the connection is established, it is enough to check the limited device, and it is not necessary to check all devices on a bus.

When the iPCRs of all the devices to be checked have not been checked completely (No at step S64), the iPCRs of the devices to be checked are checked (step S65), and it is determined whether the channel number 809 of the oPCR 805 is identical with the channel number of the iPCR of the devices to be checked, and whether the iPCR is active or not (step S66). According to this embodiment, the iPCR 825 of the device 82 is checked.

When the channel number 809 of the oPCR 805 is identical with the channel number 829 of the iPCR 825 of the device 82, and the iPCR 825 is active (Yes at step S66), a communicatable optimal data rate B is determined by taking the physical connection and the data rate capability into account (step S67). That is, the optimal data rate B is determined by taking into account the speed of the physical layer of all the devices existing on the physical path between the device 80 and the device 82 to be checked, and the data rate capability of the device 80 and the device 82 to be checked.

It is then determined whether the data rate A to be set at step S63 is higher than the optimal data rate B determined at step S67 (step S68).

When the data rate A is higher than the optimal data rate B (Yes at step S68), the optimal data rate B is set as a new value of the data rate A, and the device to be checked is transferred to the next device on the bus (step S70), followed by the process of step S4 and subsequent steps.

When it is determined at step S68 that the data rate A to be set is not higher than the optimal data rate B determined at step S67 (No at step S68), on the other hand, the process proceeds to step S70.

When it is determined at step S66 that the channel number 809 of the oPCR 805 is different from the channel number 829 of the iPCR 825 of the device 82, or the iPCR 825 of the device 82 is not active (No at step S66), the process proceeds to step S70.

When it is determined at step S64 that all check of the iPCR of the device 825 has been completed (Yes at step S64), the present value of the data rate 808 on the oPCR 805 is compared with the value of the data rate A determined by the aforementioned process (step S71).

When the value of the data rate A is equal to or higher than the present value of the data rate 808 on the oPCR 805 (Yes at step S71), the value of the data rate 808 of the device 80 is updated by the value of the data rate A (step S72).

With the relative increase in the data rate, the band that has become unnecessary is returned to the IRM (step S73), and the process is terminated (step S74). In this way, the wasteful band consumption is prevented.

In the configuration of Fig. 10, for example, when the data rate capability 806 of the device 80 is S400, the data rate capability 826 of the device 82 is S400, and the data rate 808 at the time of breaking the overlay connection with the device 81 is S200, then, the plug register management unit sets the data rate, at S400, to be updated.

When it is determined at step S71 that the value of the data rate A is lower than the present value of the data rate 808 on the oPCR 805 (No at step S71), it indicates that there exists a device incapable of communication even if connection is established. According to this embodiment, therefore, the process is terminated as a failure (step S74).

As described above, according to this embodiment, when the overlay connection is abandoned, the device 80 checks the existing connection after the abandonment, and determines an optimal data rate that can newly secure the transmitting and receiving operations. Therefore, the data rate that has decreased relatively at the time of establishing the overlay connection can be changed to the optimal data rate according to the connection after abandonment. Thus, the wasteful band consumption is prevented, and it is possible to carry out the optimal information transmission at high speed.

This embodiment is explained for a case in which the data rate setting apparatus according to the invention is applied to the device 80 as a transmitting device. Nevertheless, it is of course that the data rate setting apparatus according to this embodiment is not limited to the transmitting device, the data rate setting function may be added to any of the devices on the network or a data rate setting apparatus having only the data rate setting function may be provided.

Also, the process shown in Fig. 13 may be arranged in such a manner that the device 80 as a data rate setting apparatus monitors all the receiving devices regularly, and the process is executed at the time of detecting that the overlay connection is cut off.

Incidentally, it is also possible that the program corresponding to the flowchart of the data rate setting process at the time of establishing the overlay connection and after abandoning the overlay connection as described with reference to Figs. 12 and 13 is stored in an information recording medium such as a flexible disk and read, and executed by reading an ordinary microcomputer or the like, and the ordinary microcomputer or the like functions as the controller 810 according to this embodiment.

It should be understood that various alternatives to the embodiments of the invention described herein may be employed in practicing the invention. Thus, it is intended that the following claims define the scope of the invention and that methods and structures within the scope of these claims and their equivalents be covered thereby.

## Claims

1. A data rate setting apparatus for establishing an overlay connection between a transmitting device (80) for transmitting information through a serial bus and a receiving device (81) for receiving the transmitted information through the serial bus, the transmitting device (80) having already a connection established with a further receiving device (82), and setting a data rate for transmitting or receiving the information, the connection between the transmitting device (80) and the receiving device (81) being a connection for an isochronous transmission, **characterized in that** the apparatus comprises:

    a detecting device (810) which is adapted to detect, at the time of establishing the connection, at least:

        the receiving rate capability (816) at which the information can be received by the receiving device (81), and
        the data rate (808) of a connection established between the transmitting device (80) and the further receiving device (82); and

    a setting device (810) which is adapted to set a transmission rate to a rate equal to or lower than the lowest data rate of the detected receiving rate capability and the data rate (808) of the connection established between the transmitting device (80) and the further receiving device (82).

2. A data rate setting apparatus according to claim 1,
   wherein when the information is transmitted by time division on the serial bus,
   the setting device (810) is adapted to set the transmission rate by allocating bandwidth for transmission.

3. A data rate setting apparatus according to claim 1,
   wherein when the transmitting device (80) has already established the connection on the serial bus to transmit and receive the information to and from other devices connected on the serial bus,
   the transmitting device (80) and the receiving device (81) are adapted to be connected to each other, using a channel used to transmit the information in the already established connection.

4. A data rate setting apparatus according to claim 1,
   wherein the receiving device (81) can receive the information at a plurality of different data rates.

5. A data rate setting apparatus according to claim 1,

wherein the serial bus conforms to the IEEE (Institute of Electrical and Electronic Engineers) 1394 standard.

6. An information transmission system comprising at least a data rate setting apparatus described in claim 1, a transmitting device (80), and a receiving device (81).

7. A data rate setting method for establishing an overlay connection between a transmitting device (80) for transmitting information through a serial bus and a receiving device (81) for receiving the transmitted information through the serial bus, the connection between the transmitting device (80) and the receiving device (81) being a connection for an isochronous transmission, the transmitting device (80) having already a connection established with a further receiving device (82), and setting a data rate for transmitting or receiving the information, **characterized in that** the method comprises:

    a detection process for detecting, at the time of establishing the connection at least

        the receiving rate capability at which the information can be received by the receiving device (81), and the data rate (808) of a connection established between the transmitting device (80) and the further receiving device (82);

        a setting process for setting a transmission rate to a rate equal to or lower than the lowest data rate of the detected receiving rate capability and the data rate (808) of the connection established between the transmitting device (80) and the further receiving device (82).

8. A data rate setting program for a computer included in a data rate setting apparatus for, when executed on the computer, establishing an overlay connection according to all of the steps of claim 7.

9. An information recording medium in which a data rate setting program described in claim 8 is recorded in a manner readable by the computer.


**Patentansprüche**

1. Gerät zum Einstellen der Datenrate zum Herstellen einer Overlay-Verbindung zwischen einem Übertragungsgerät (80) zum Übertragen von Informationen durch einen seriellen Bus und einem Empfangsgerät (81) zum Empfangen der übertragenen Informationen durch den seriellen Bus, wobei das Übertragungsgerät (80) bereits eine Verbindung mit einem weiteren Empfangsgerät (82) hergestellt hat, und zum Einstellen einer Datenrate zum Übertragen oder Empfangen der Informationen, wobei die Verbindung zwischen dem Übertragungsgerät (80) und dem Empfangsgerät (81) eine Verbindung zur isochronen Übertragung ist, **dadurch gekennzeichnet, dass** das Gerät Folgendes aufweist:

    eine Erfassungsvorrichtung (810), welche adaptiert ist, beim Herstellen der Verbindung mindestens Folgendes zu erfassen:

        die Empfangsratenfähigkeit (816), mit welcher die Informationen durch das Empfangsgerät (81) empfangen werden können, und die Datenrate (808) einer zwischen dem Übertragungsgerät (80) und dem weiteren Empfangsgerät (82) hergestellten Verbindung; und

    eine Einstellvorrichtung (810), welche adaptiert ist, eine Übertragungsrate auf eine Rate einzustellen, welche gleich oder niedriger als die niedrigste Datenrate der erfassten Empfangsratenfähigkeit und die Datenrate (808) der zwischen dem Übertragungsgerät (80) und dem weiteren Empfanggerät (82) hergestellten Verbindung ist.

2. Gerät zum Einstellen einer Datenrate nach Anspruch 1, wobei beim Übertragen der Informationen durch Zeiteinteilung auf dem seriellen Bus die Einstellvorrichtung (810) adaptiert ist, die Übertragungsrate durch das Zuteilen der Bandbreite für die Übertragung einzustellen.

3. Gerät zum Einstellen der Datenrate nach Anspruch 1, wobei, wenn das Übertragungsgerät (80) bereits die Verbindung auf dem seriellen Bus hergestellt hat, um die Informationen zu und von anderen Vorrichtungen, welche auf dem seriellen Bus angeschlossen sind, zu übertragen und zu empfangen, das Übertragungsgerät (80) und Empfangsgerät (81) adaptiert sind, unter Verwendung eines Kanals miteinander verbunden zu sein, welcher zum Übertragen der Informationen in der bereits hergestellten Verbindung verwendet wird.

4. Gerät zum Einstellen der Datenrate nach Anspruch 1, wobei das Empfangsgerät (81) die Informationen mit einer Mehrzahl von unterschiedlichen Datenraten empfangen kann.

5. Gerät zum Einstellen der Datenrate nach Anspruch 1, wobei der serielle Bus der IEEE (Institute of Electrical and Electronic Engineers)-1394-Norm entspricht.

6. Informationsübertragungssystem mit mindestens einem Gerät zum Einstellen der Datenrate nach Anspruch 1, einem Übertragungsgerät (80) und einem Empfangsgerät (81).

7. Verfahren zum Einstellen der Datenrate zum Herstellen einer Overlay-Verbindung zwischen einem Übertragungsgerät (80) zum Übertragen von Informationen durch einen seriellen Bus und einem Empfangsgerät (81) zum Empfangen der übertragenen Informationen durch den seriellen Bus, wobei die Verbindung zwischen dem Übertragungsgerät (80) und dem Empfangsgerät (81) eine Verbindung für eine isochrone Übertragung ist, das Übertragungsgerät (80) bereits eine Verbindung mit einem weiteren Empfangsgerät (82) hergestellt hat, und zum Einstellen einer Datenrate zum Übertragen oder Empfangen der Informationen, **dadurch gekennzeichnet, dass** das Verfahren Folgendes aufweist:

ein Erfassungsverfahren zum Erfassen beim Herstellen der Verbindung von zumindest

der Empfangsratenfähigkeit, mit welcher die Informationen durch das Empfangsgerät (81) empfangen werden können, und
der Datenrate (808) einer zwischen dem Übertragungsgerät (80) und dem weiteren Empfangsgerät (82) hergestellten Verbindung; und

ein Einstellverfahren zum Einstellen einer Übertragungsrate auf eine Rate, welche gleich oder niedriger als die niedrigste Datenrate der erfassten Empfangsratenfähigkeit und die Datenrate (808) der zwischen dem Übertragungsgerät (80) und dem weiteren Empfangsgerät (82) hergestellten Verbindung ist.

8. Programm zum Einstellen einer Datenrate für einen Computer, welches in einem Gerät zum Einstellen der Datenrate enthalten ist, zum Herstellen einer Overlay-Verbindung nach allen Schritten des Anspruchs 7, wenn es auf dem Computer ausgeführt wird.

9. Informationsaufnahmemedium, auf welchem ein Programm nach Anspruch 8 zum Einstellen der Datenrate auf eine durch den Computer lesbare Weise aufgenommen ist.

**Revendications**

1. Appareil de réglage de débit de données destiné à établir une connexion de recouvrement entre un dispositif de transmission (80) destiné à transmettre des informations par l'intermédiaire d'un bus série, et un dispositif de réception (81) destiné à recevoir les informations transmises par l'intermédiaire du bus série, une connexion étant déjà établie entre le dispositif de transmission (80) et un autre dispositif de réception (82), et à régler un débit de données pour transmettre ou recevoir les informations, la connexion entre le dispositif de transmission (80) et le dispositif de réception (81) étant une connexion d'une transmission isochrone, **caractérisé en ce que** l'appareil comprend :

un dispositif de détection (810) qui est adapté pour détecter, au moment de l'établissement de la connexion, au moins :

- la capacité de débit de réception (816) à laquelle les informations peuvent être reçues par le dispositif de réception (81), et
- le débit des données (808) d'une connexion établie entre le dispositif de transmission (80) et l'autre dispositif de réception (82) ; et

un dispositif de réglage (810) qui est adapté pour régler un débit de transmission à un débit inférieur ou égal au débit des données le plus faible de la capacité de débit de réception détectée et le débit de données (808) de la connexion établie entre le dispositif de transmission (80) et l'autre dispositif de réception (82).

2. Appareil de réglage de débit de données selon la revendication 1,
dans lequel, lorsque les informations sont transmises par répartition dans le temps sur le bus série,
le dispositif de réglage (810) est adapté pour régler le débit de transmission en attribuant une largeur de bande pour la transmission.

3. Appareil de réglage de débit de données selon la revendication 1,
dans lequel, lorsque le dispositif de transmission (80) a déjà établi la connexion sur le bus série pour transmettre et recevoir les informations vers, et en provenance, d'autres dispositifs connectés sur le bus série,
le dispositif de transmission (80) et le dispositif de réception (81) sont adaptés pour être connectés l'un à l'autre, en utilisant un canal utilisé pour transmettre les informations dans la connexion déjà établie.

4. Appareil de réglage de débit de données selon la revendication 1,
dans lequel le dispositif de réception (81) peut recevoir les informations à une pluralité de débits différents.

5. Appareil de réglage de débit de données selon la revendication 1,
dans lequel le bus série répond à la norme 1394 de l'IEEE (Institute of Electrical and Electronic Engineers).

6. Système de transmission d'informations comprenant au moins un appareil de réglage de débit de données décrit dans la revendication 1, un dispositif de transmission (80), et un dispositif de réception (81).

7. Procédé de réglage de débit de données destiné à établir une connexion de recouvrement entre un dispositif de transmission (80) destiné à transmettre des informations par l'intermédiaire d'un bus série, et un dispositif de réception (81) destiné à recevoir les informations transmises par l'intermédiaire du bus série, la connexion entre le dispositif de transmission (80) et le dispositif de réception (81) étant une connexion d'une transmission isochrone, une connexion étant déjà établie entre le dispositif de transmission (80) et un autre dispositif de réception (82), et à régler un débit de données pour transmettre ou recevoir les informations, **caractérisé en ce que** le procédé comprend :

   un processus de détection pour détecter, au moment de l'établissement de la connexion au moins :

      - la capacité de débit de réception à laquelle les informations peuvent être reçues par le dispositif de réception (81), et
      - le débit des données (808) d'une connexion établie entre le dispositif de transmission (80) et l'autre dispositif de réception (82) ;

   un processus de réglage pour régler un débit de transmission à un débit inférieur ou égal au débit de données le plus faible de la capacité de débit de réception détectée et le débit de donnée (808) de la connexion établie entre le dispositif de transmission (80) et l'autre dispositif de réception (82).

8. Programme de réglage de débit de données d'un ordinateur inclus dans un appareil de réglage de débit de données destiné à établir, quand il est exécuté sur l'ordinateur, une connexion de recouvrement selon toutes les étapes de la revendication 7.

9. Support d'enregistrement d'informations dans lequel un programme de réglage de débit de données décrit dans la revendication 8, est enregistré de telle manière qu'il puisse être lu par l'ordinateur.

# FIG. 1

13:SERIAL BUS

14:CHANNEL

101:iPCR

102:P2P CONNECTION COUNTER

100:iMPR

111:oPCR

112:P2P CONNECTION COUNTER

110:oMPR

121:iPCR

122:P2P CONNECTION COUNTER

120:iMPR

10:DEVICE

11:DEVICE

12:DEVICE

- - - - - - - - - → POINT-TO-POINT CONNECTION

─────────────→ BROADCAST CONNECTION

EP 1 499 071 B1

# FIG. 2

# FIG. 3

EP 1 499 071 B1

20:oMPR

| DATA RATE CAPABILITY FIELD<br>31 | BROADCAST CHANNEL BASE FIELD<br>32 | NON-PERSISTENT EXTENSION FIELD<br>33 | PERSISTENT EXTENSION FIELD<br>34 | RESERVED FIELD<br>35 | NUMBER-OF-OUTPUT-PLUGS FIELD<br>36 |
|---|---|---|---|---|---|
| 2 BITS | 6 BITS | 8 BITS | 8 BITS | 3 BITS | 5 BITS |

# FIG. 4

| DATA RATE CAPABILITY FIELD | RESERVED FIELD | NON-PERSISTENT EXTENSION FIELD | PERSISTENT EXTENSION FIELD | RESERVED FIELD | NUMBER-OF-INPUT-PLUGS FIELD |
|---|---|---|---|---|---|
| 41 | 42 | 43 | 44 | 45 | 46 |
| 2 BITS | 6 BITS | 8 BITS | 8 BITS | 3 BITS | 5 BITS |

22 : iMPR

EP 1 499 071 B1

# FIG. 5

210:oPCR

| 51 | 52 | 53 | 54 | 55 | 56 | 57 | 58 |
|---|---|---|---|---|---|---|---|
| ON-LINE FLAG FIELD | BROADCAST CONNECTION COUNTER FIELD | p2p CONNECTION COUNTER FIELD | RESERVED FIELD | CHANNEL NUMBER FIELD | DATA RATE FIELD | OVERHEAD ID FIELD | PAYLOAD FIELD |
| 1 BIT | 1 BIT | 6 BITS | 2 BITS | 6 BITS | 2 BITS | 4 BITS | 10BITS |

EP 1 499 071 B1

# FIG. 6

230: i PCR

| ON-LINE 61 | BROADCAST CONNECTION COUNTER FIELD 62 | p2p CONNECTION COUNTER FIELD 63 | RESERVED FIELD 64 | CHANNEL NUMBER FIELD 65 | RESERVED FIELD 66 |
|---|---|---|---|---|---|
| 1 BIT | 1 BIT | 6 BITS | 2 BITS | 6 BITS | 16BITS |

# FIG. 7

S10 — ( START )

S11 — ACQUIRE ISOCHRONOUS RESOURCE

NO ←— SUCCESSFULLY ACQUIRED? — S12 — YES

S13 — SET ACQUIRED CHANNEL AS UPDATED VALUE

S14 — SET DATA RATE AND OVERHEAD ID AS UPDATED VALUE

S15 — INCREMENT p2p CONNECTION COUNTER

S16 — UPDATE oPCR AND iPCR

YES ←— BOTH FAILED TO BE UPDATED — S19 — NO ←— BOTH SUCCESSFULLY UPDATED? — S17 — YES

DISCONNECT PCR SUCCESSFULLY UPDATED — S20

( FAILED TO ESTABLISH CONNECTION ) — S21

( CONNECTION ESTABLISHED SUCCESSFULLY ) — S18

23

# FIG. 8

S30 — ( START )

S31 — SET oPCR CHANNEL NUMBER AS UPDATED VALUE OF iPCR

S32 — INCREMENT p2p CONNECTION COUNTER

S33 — UPDATE oPCR AND iPCR

BOTH FAILED TO BE UPDATED — S36

BOTH SUCCESSFULLY UPDATED? — S34

YES — NO — YES

NO — DISCONNECT PCR SUCCESSFULLY UPDATED — S37

FAILED TO ESTABLISH CONNECTION
S38

CONNECTION ESTABLISHED SUCCESSFULLY
S35

# FIG. 9

DEVICE

DEVICE

71

72

73:1394 CABLE

DEVICE

70

# FIG.10

DEVICE
72

DEVICE
71

DEVICE
74

73:1394 CABLE

DEVICE
70

# FIG.11

S:INFORMATION TRANSMISSION SYSTEM

# FIG.12

S40 — START

S41 — SET UPDATED VALUE OF CHANNEL NUMBER

S42 — DATA RATE OF TRANSMITTING DEVICE oPCR HIGHER THAN DATA RATE CAPABILITY OF RECEIVING DEVICE?

YES

S43 — SET DATA RATE

S44 — ACQUIRE NEW BAND

S45 — BAND ACQUIRED SUCCESSFULLY?

NO

YES

NO

S46 — INCREMENT p2p CONNECTION COUNTER

S47 — UPDATE oPCR AND iPCR

S48 — BOTH SUCCESSFULLY UPDATED?

NO

YES

S50 — BOTH FAILED TO BE UPDATED

YES

NO

S51 — DISCONNECT PCR SUCCESSFULLY UPDATED

FAILED TO ESTABLISH CONNECTION

S52

CONNECTION ESTABLISHED SUCCESSFULLY

S49

# FIG.13

S60 ~ ( START )

S61 ~| DETECT oPCR UPDATING |

OVERLAY CONNECTION CUT OFF? S62

YES

S63 ~| SET DATA RATE A BY VALUE OF oMPR DATA RATE CAPABILITY |

NO

S70 | CHECK NEXT DEVICE |

END OF CHECK OF ALL iPCR? S64

YES

NO

| CHECK iPCR |

S65

iPCR ACTIVE WITH SAME CHANNEL NUMBER? S66

NO

YES

| SET OPTIMAL DATA RATE B |

S67

A > B? S68

NO

YES

| DATA RATE A = B |

S69

PRESENT DATA RATE ≦ A? S71

NO

S72

YES

| UPDATE oPCR DATA RATE BY A |

| RETURN BAND |

S73

S74 ~ ( PROCESSING END )

**EP 1 499 071 B1**

## REFERENCES CITED IN THE DESCRIPTION

### Patent documents cited in the description

- EP 0971508 A2
- EP 0959590 A2